# DEMANDE DE BREVET EUROPEEN

(11) **EP 1 647 897 A1**
(43) Date de publication de la demande: **19.04.2006**
(21) Numéro de dépôt: 05300810.8
(22) Date de dépôt: 11.10.2005
(51) Int. Cl.: G06F 17/27, G10L 15/18

(54) **Génération informatique de règles de correction de séquence de concept**

(30) Priorité: 12.10.2004 FR 0410788
(71) Demandeur: FRANCE TELECOM, 75015 Paris (FR)
(72) Inventeur: Ance, Céline, 22560 Pleumeur Bodou (FR); Bretier, Philippe, 22600 Trelevern (FR); Panaget, Franck, 22560 Trebeurden (FR)
(74) Mandataire: Lapoux, Roland

(57) **Abrégé**

Un dispositif (SC) génère informatiquement des règles de correction de séquences de concept sur la base de premiers et deuxièmes énoncés textuels prédéterminés. Il comprend un module (MD) déterminant des premières et deuxièmes séquences de concept respectivement en fonction des premiers et deuxièmes énoncés, un comparateur (CP) comparant chaque première séquence aux deuxièmes séquences pour sélectionner des premières séquences de concept différentes des deuxièmes séquences de concept, un générateur (GR) pour analyser chaque première séquence différente afin que le générateur estime au moins une caractéristique de la première séquence différente et génère au moins une règle de correction de séquence de concept en fonction de la caractéristique estimée pour la première séquence différente et considérée comme invalide, et un correcteur (CR) corrigeant des séquences de concept prédéterminées en fonction des règles de correction générées.

## Description

La présente invention concerne un procédé de génération informatique de règles pour corriger des séquences de concept. L'invention se situe dans le domaine de l'interprétation d'énoncés en langage naturel, par exemple au cours d'un service mettant en oeuvre un dialogue entre une personne et une machine ou des fonctions d'analyse sémantique d'un document textuel ou vocal.

Dans l'état de la technique, les systèmes de détermination de séquences de concept comprennent généralement deux phases, une première dans laquelle les séquences de concept sont déterminées, et une deuxième dans laquelle les séquences de concept sont validées, corrigées ou supprimées. Plus précisément, dans la deuxième phase les séquences de concept sont corrigées puis validées selon des connaissances spécifiques au domaine linguistique des séquences de concept mises en oeuvre à travers des fonctions telles que le groupement de concepts en concepts plus complexes, la transformation de concepts en fonction de leur collocation, et la détection d'un ordonnancement particulier des concepts dans les séquences dénotant un sens particulier.

Ainsi, les systèmes connus de détermination de séquences de concept sont confrontés à un enrichissement permanent avec de nouvelles fonctions qui améliorent la détermination de séquences de concept. Cependant ces systèmes connus n'offrent pas de correction et validation complètes de séquences de concept puisque certaines d'entre elles ne sont jamais traitées par les fonctions. Par conséquent, ces systèmes connus évoluent difficilement et n'offrent pas de solution complète pour déterminer des séquences de concept.

L'invention a pour **objectif** de remédier aux inconvénients précités en générant informatiquement des règles de correction de séquences de concept afin de produire un système de correction de séquences de concept évolutif.

Pour atteindre cet objectif, un procédé de génération informatique de règles de correction de séquence de concept, une séquence de concept provenant d'un énoncé textuel, est caractérisé en ce qu'il comprend les étapes suivantes:
- détermination et mémorisation à partir de premiers énoncés textuels, d'un ensemble de premières séquences de concept susceptibles d'être corrigées;
- détermination et mémorisation à partir de deuxièmes énoncés textuels, d'un ensemble de deuxièmes séquences de concept dites valides;
- comparaison de l'ensemble de premières séquences de concept à l'ensemble de deuxièmes séquences de concept et sélection des premières séquences de concept différentes des deuxièmes séquences de concept;
- analyse des premières séquences de concept sélectionnées et estimation d'au moins une caractéristique pour chaque première séquence de concept analysée; et
- génération et mémorisation d'au moins une règle de correction de séquence de concept en fonction de ladite au moins une caractéristique estimée.

L'invention concerne également un dispositif de génération informatique de règles de correction de séquence de concept, une séquence de concept provenant d'un énoncé textuel. Le dispositif est caractérisé en ce qu'il comprend :
- un moyen pour déterminer et mémoriser à partir de premiers énoncés textuels, un ensemble de premières séquences de concept susceptibles d'être corrigées;
- un moyen pour déterminer et mémoriser à partir de deuxièmes énoncés textuels, un ensemble de deuxièmes séquences de concept dites valides;
- un moyen pour comparer l'ensemble de premières séquences de concept à l'ensemble de deuxièmes séquences de concept afin de sélectionner des premières séquences de concept différentes des deuxièmes séquences de concept,
- un moyen pour analyser les premières séquences de concept sélectionnées et pour estimer au moins une caractéristique pour chaque première séquence de concept analysée, et
- un moyen pour générer et mémoriser au moins une règle de correction de séquence de concept en fonction de ladite au moins une caractéristique estimée.

D'autres caractéristiques et avantages de la présente invention apparaîtront plus clairement à la lecture de la description suivante de plusieurs réalisations préférées de l'invention, données à titre d'exemples non limitatifs, en référence aux **dessins** annexés correspondants dans lesquels :
- la figure 1 est un bloc-diagramme schématique d'un dispositif de correction informatique de séquences de concept mettant en oeuvre le procédé de génération informatique de règles de correction de séquences de concept selon l'invention ; et
- la figure 2 est un algorithme du procédé de génération informatique de règles de correction de séquences de concept selon l'invention.

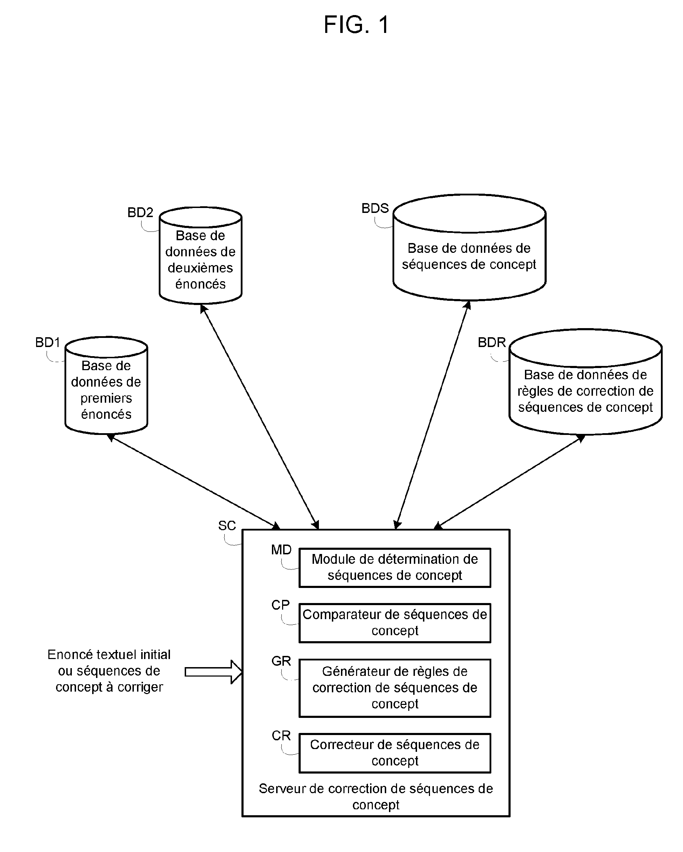

En référence à la figure 1, le dispositif de correction informatique de séquences de concept mettant en oeuvre le procédé de correction selon l'invention comprend principalement un serveur de correction de séquences de concept SC, une base de données de premiers énoncés BD1, une base de données de deuxièmes énoncés BD2, une base de données de séquences de concept BDS et une base de données de règles de correction de séquences de concept BDR.

Le serveur de correction de séquences de concept SC comprend principalement un module de détermination de séquences de concept MD, un comparateur de séquences de concept CP, un générateur de règles de correction de séquences de concept GR et un correcteur de séquences de concept CR.

Dans une variante, le dispositif comprend des bases de données dont les données de chacune sont les données d'au moins deux des quatre bases de données BD1, BD2, BDS et BDR.

La base de données BDR peut comprendre initialement des règles de correction de séquences de concept.

Les bases de données sont incorporées partiellement ou totalement dans le serveur de correction SC, ou partiellement ou totalement dans des serveurs de base de données pouvant être reliés au serveur de correction SC par un réseau de télécommunication.

Dans une autre variante, le correcteur de séquences de concept GR est dans un serveur différent du serveur de correction SC afin de séparer complètement la génération de règles de correction de séquence de concept de la correction de séquence de concept.

Le serveur de correction SC reçoit un énoncé textuel initial ou directement des séquences de concept. L'énoncé textuel initial est établi et transmis par exemple par un système de reconnaissance vocale traitant des signaux vocaux d'un service vocal. Les séquences de concept sont établies et transmises par exemple par un système de traitement linguistique.

Des séquences de concept sont déterminées à partir de l'énoncé textuel initial. Ces séquences de concept de l'énoncé initial ou des séquences de concept fournies directement sont alors corrigées automatiquement selon l'invention. Un énoncé initial représente par exemple une demande d'un usager présentée sous une forme textuelle. Si la demande d'usager est présentée sous une forme audio et/ou vidéo, un énoncé textuel initial est alors extrait de la demande d'usager, par exemple par un moteur de reconnaissance vocale.

Un premier énoncé textuel est un énoncé participant à l'élaboration de règles de correction de séquences de concept et pouvant servir à déterminer des séquences de concept à corriger. Le premier énoncé textuel est par exemple un énoncé textuel transformé résultant d'une transformation automatique d'une requête d'usager. Par exemple, lorsque la requête d'usager est sous forme audio, un moteur de reconnaissance vocale extrait le son de la requête d'usager afin de transformer le son en texte. Dans un autre exemple, lorsque la requête d'usager est sous forme d'une courte séquence vidéo, du son est extrait de la séquence vidéo pour que le moteur de reconnaissance vocale détermine le texte issu du son extrait.

Un deuxième énoncé textuel participe à l'élaboration de règles de correction de séquences de concept. Des séquences de concept sont déterminées à partir du deuxième énoncé textuel et seront considérées valides en opposition aux séquences de concept à corriger. Le deuxième énoncé est par exemple un énoncé textuel transcrit résultant d'une transformation manuelle ou pseudo-manuelle de la requête d'usager. Par exemple, cette transformation est réalisée à travers des logiciels d'aide à la transcription et à l'annotation de signaux audio qui assistent partiellement un usager administrateur ("transcripteur") en lui proposant à travers une interface graphique de segmenter les signaux audio, de transcrire des paroles contenues dans les signaux audio, de marquer des tours de parole, c'est-à-dire des changements de locuteur, et d'annoter les signaux audio afin de les segmenter thématiquement et acoustiquement. Deux logiciels connus sous les appellations "Transcriber" et "Praat" présentent de telles fonctionnalités.

Un concept est une représentation textuelle du sens d'un mot ou d'un groupe de mots dans un énoncé textuel, par exemple d'un premier ou deuxième énoncé textuel. Dans les exemples suivants, les concepts sont présentés entre parenthèse (concept) et les séquences de concept entre crochets [(concept1)(concept2)]. Par exemple, les concepts de l'énoncé transformé ou transcrit suivant "Je cherche un hôtel à Prague, euh non à Budapest" sont [(Dormir)(Lieu1)(Lieu2)]. Les concepts d'un énoncé peuvent être déterminés par correspondance entre un index de mots ou de groupes de mots associés à des concepts. Les différentes combinaisons de concepts successifs d'un énoncé textuel sont appelées "séquences de concept". Par exemple, des séquences de concept de l'exemple précédents sont [(Dormir) (Lieu1) (Lieu2)] ou [(Dormir)(Lieu1)] ou [(Dormir)(Lieu2)]. Une séquence de concept peut aussi ne comprendre qu'un seul concept.

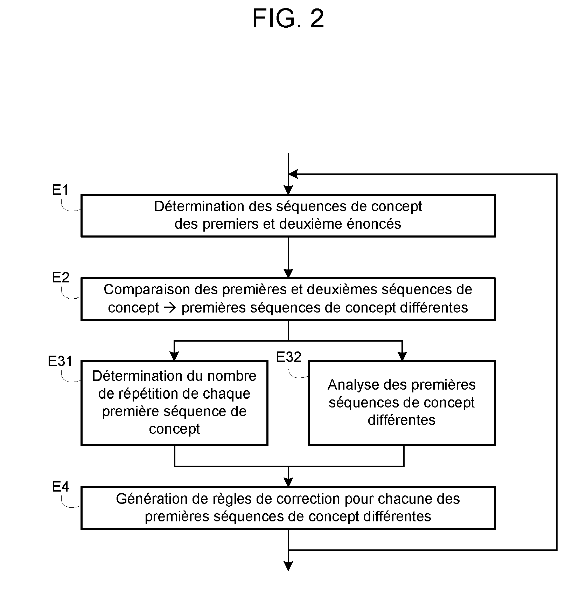

Le procédé de génération de règles de correction selon l'invention comprend principalement des étapes E1 à E4 montrées à la figure 2.

Ces étapes sont répétées régulièrement afin de traiter des premiers et deuxièmes énoncés textuels mémorisés récemment dans les bases de données BD1 et BD2. L'objectif des étapes suivantes est de déduire des règles de correction en fonction du résultat de la comparaison de l'ensemble des premières séquences de concept provenant de premiers énoncés à l'ensemble des deuxièmes séquences de concept réputées valides et provenant de deuxièmes énoncés.

Par exemple, lors d'un service vocal de recherche de restaurant mettant en oeuvre un dialogue entre un usager et une machine, les premiers énoncés résultent d'un traitement d'une demande vocale de l'usager par un moteur de reconnaissance vocale et sont mémorisés régulièrement dans la base de données de premiers énoncés BD1. Dans cet exemple, les deuxièmes énoncés sont des transcriptions des premiers énoncés. Une transcription est une transformation manuelle assistée par un logiciel de transcription d'un énoncé textuel ou vocal. Les concepts réputés valides sont alors déterminés dans cet exemple en fonction des deuxièmes énoncés, puisque les deuxièmes énoncés ont été contrôlés par un opérateur humain.

A l'étape E1, le module de détermination de séquences de concept MD détermine des premières et deuxièmes séquences de concept respectivement en fonction des premiers et deuxièmes énoncés mémorisés respectivement dans les bases de données de premiers et deuxièmes énoncés prédéterminés BD1 et BD2. Les premières et deuxièmes séquences de concept déterminées sont mémorisées dans la base de données de séquences de concept BDS. Les concepts sont généralement déterminés par une transformation d'une séquence de mots en séquence de concept en fonction de règles de transformation. Dans une variante, la détermination de concept est réalisée par des correspondances entre des séquences de mots et des séquences de concept.

En variante, le procédé selon l'invention accepte toutes les déterminations de séquences de concept ou tous les modules de détermination de séquences de concept, c'est-à-dire tous les moyens mis en oeuvre pour déterminer des séquences de concept d'un énoncé textuel.

Par exemple, le premier énoncé est issu du traitement d'une demande en anglais d'un usager par un moteur de reconnaissance vocale :
"I'd like to eat something near **bye** Champs Elysées".

La première séquence de concept déterminée de ce premier énoncé est :
[(Restaurant)(Proche_De)(Fin_de_session)(Champs_Elysées) ].

Dans cet exemple, le deuxième énoncé issu de la transcription du premier énoncé est "I'd like to eat something **by** Champs Elysées" et la séquence de concept déterminée est :
[(Restaurant)(Proche_De)(Champs_Elysées)].

Dans un autre exemple, le premier énoncé est "oui euh non merci un italien" et la première séquence de concept déterminée est [ (Oui) (Non) (Merci) (Italien) ] . Le deuxième énoncé est la transcription du premier énoncé, soit "non merci un italien" et la séquence de concept déterminée [ (Non) (Merci) (Italien) ] .

A l'étape E2, le comparateur CP compare chaque première séquence de concept aux deuxièmes séquences de concept déterminées pour sélectionner des premières séquences de concept différentes des deuxièmes séquences de concept et mémorise les premières séquences de concept différentes dans la base de données de séquences de concepts BDS. Les premières séquences de concept étant différentes des deuxièmes séquences de concept, les premières séquences de concept ne satisfont pas les règles de correction initialement mémorisées dans la base de données BDR.

Dans une variante, les premières séquences de concept différentes sont mémorisées dans la base de données de règles de correction BDR.

Dans une variante, une première ou deuxième séquence peut être une sous-séquence de la première séquence, respectivement de la deuxième séquence. Par conséquent, le comparateur détermine toutes les combinaisons possibles de séquences de concept à partir des séquences de concept déterminées, sans modifier l'ordonnancement des concepts des séquences déterminées, ce qui augmente la précision des résultats des comparaisons des séquences de concept. Dans l'exemple où la première séquence de concept déterminée est :
[(Restaurant)(Proche_De)(Fin_de_session)(Champs_Elysées) ] et
   la deuxième séquence de concept est :
[(Restaurant)(Proche_De)(Champs_Elysées)],
   le comparateur CP effectue une comparaison de chacune des premières séquences de concept suivantes :
   [(Restaurant)(Proche_De)(Fin_de_session)(Champs_ Elysées)],
   [(Restaurant)(Proche_De)(Fin_de_session)],
   [(Proche_De)(Fin_de_session)(Champs_Elysées)],
   [(Restaurant)(Proche_De)],
   [(Proche_De)(Fin_de_session)],
   [(Fin_de_session) (Champs_Elysées)]
      et aux deuxièmes séquences suivantes :
   [(Restaurant)(Proche_De)(Champs_Elysées)],
   [(Proche_De)(Champs_Elysées)],
   [(Restaurant)(Proche_De)].

Dans cet exemple, les premières séquences de concept différentes des deuxièmes séquences sont :
[(Restaurant)(Proche_De)(Fin_de_session)(Champs_ Elysées)],
[(Restaurant)(Proche_De)(Fin_de_session)],
[(Proche_De)(Fin_de_session)(Champs_Elysées)],
[(Proche_De)(Fin_de_session)],
[(Fin_de_session)(Champs_Elysées)].

Dans une variante, un deuxième énoncé correspond à une transcription d'un premier énoncé prédéterminé. La comparaison de séquences est appliquée entre la première séquence de concept déterminée en fonction du premier énoncé prédéterminé et la deuxième séquence de concept déterminée en fonction du deuxième énoncé correspondant à la transcription.

Après l'étape E2, les étapes suivantes E31 et E32 sont exécutées de préférence en parallèle, ou bien successivement avec l'étape E31 précédant l'étape E32.

A l'étape E31, le générateur de règles de concept GR détermine un nombre de répétition de chaque première séquence de concept différente parmi l'ensemble des premières séquences de concept. Par exemple, le générateur détermine que la première séquence de concept différente [(Proche_De)(Fin_de_session)] est répétée 13 fois dans l'ensemble des premières séquences de concept déterminées.

A l'étape E32, le générateur GR analyse chacune des premières séquences de concept différentes, généralement à l'aide de l'exécution d'un algorithme d'analyse, afin d'estimer des caractéristiques de chaque première séquence différente, et de les mémoriser en association avec la première séquence dans la base BDS.

Les caractéristiques de première séquence de concept différente sont par exemple les concepts qui n'existent pas dans les deuxièmes séquences, la position des concepts dans chaque première séquence, la liste de nombre de répétition d'un concept dans la première séquence, etc.

A l'étape E4, le générateur GR génère au moins une règle de correction pour chaque première séquence de concept différente en dépendance des caractéristiques estimées de celles-ci si le nombre de répétitions de la première séquence de concept différente est supérieur à un seuil prédéterminé. Les règles de correction générées sont mémorisées dans la base de données de règles de correction de séquences de concept BDR en association avec une adresse de la première séquence de concept différente. Par exemple, le seuil prédéterminé est 10, et le générateur génère une règle de correction que pour la première séquence de concept différente dont le nombre de répétition est supérieur à 10.

La génération de règle s'appuie sur l'analyse précédente de chaque première séquence. Par exemple, pour la première séquence de concept :
[(Proche_De)(Fin_de_session)(Champs_Elysées)],
le générateur GR estime en tant que caractéristiques la position du concept (Fin_de_session) dans cette séquence et la compare aux positions de ce concept dans les séquences de deuxième énoncé. En partant du postulat que les séquences de concept des deuxièmes énoncés sont valides, le générateur déduit par exemple la règle de correction suivante : "le concept (Fin_de_session) est positionné seulement en fin de séquence".

Dans une variante, l'étape E31 est supprimée et le générateur GR génère une règle de correction pour chacune des premières séquences de concept différentes.

Une fois qu'un grand nombre de règles a été informatiquement déterminé, le serveur de correction SC est prêt à corriger des séquences de concept.

Le serveur de correction reçoit un énoncé initial dont il faut déterminer et corriger les séquences de concept. Le correcteur CR corrige les séquences de concept prédéterminées à partir de l'énoncé initial en fonction des règles de correction de séquence de concept générées. Cette correction consiste en une application des règles de correction de séquences de concept. Les séquences de concept corrigées issues de l'énoncé initial ou de séquences de concept reçues sont ultérieurement appliquées à un traitement linguistique, notamment à une analyse sémantique.

Par exemple, l'énoncé initial est "Je veux l'ADSL sur Internet". Le module MD détermine la séquence de concept correspondante [(ADSL)(Internet)]. Le correcteur CR détermine si une règle de correction mémorisée porte au moins sur l'un des concepts de la séquence. Dans cet exemple, une seule règle de correction est déterminée "suppression de l'un des deux concepts". En effet, la collocation des concepts (ADSL) et (Internet) est inutile à cause de la redondance d'information. La séquence de concept après correction est [(ADSL)].

Selon un autre exemple, l'énoncé initial est "euh oui pardon non je préfère un hôtel". Le module MD détermine la séquence de concept correspondante [(Oui)(Pardon)(Non)(Hôtel)]. Dans cet exemple, les règle de correction a appliquer sont "supprimer le concept de politesse" et "supprimer la contradiction". En effet, un concept de politesse n'apporte aucune information pertinente entre deux adverbes contradictoires, l'un d'eux doit être supprimée. La séquence de concept après correction est [(Non) (Hôtel)].

Dans une variante, le serveur de correction SC reçoit directement des séquences de concept à corriger et par conséquent le serveur de correction n'a pas besoin de déterminer les séquences de concept.

Dans une autre variante, l'administrateur du serveur SC créé et ajoute au moins une règle de correction de séquence de concept prédéterminée dans la base de données de règles de correction BDR, ce qui permet de compléter et d'affiner la correction de séquences de concept.

L'invention n'est pas limitée aux réalisations décrites ci-dessus et à leurs variantes.

L'invention décrite ici concerne un procédé et un système de génération de règles de correction de séquences de concept. Selon une implémentation préférée, les étapes du procédé sont déterminées par les instructions d'un programme de génération de règles de correction de séquences de concept incorporé dans le serveur de correction SC, et le procédé selon l'invention est mis en oeuvre lorsque ce programme est chargé dans le serveur de correction SC ou tout autre ordinateur dont le fonctionnement est alors commandé par l'exécution du programme.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation et être sous la forme de code exécutable ou dans n'importe quelle forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

Alternativement, le support d'informations peut être un circuit intégré dans lequel le programme est incorporé, le circuit étant adapté pour exécuter ou pour être utilisé dans l'exécution du procédé selon l'invention.

## Revendications

1. Procédé de génération informatique de règles de correction de séquence de concept, une séquence de concept provenant d'un énoncé textuel, **caractérisé en ce qu'**il comprend les étapes suivantes:
- détermination et mémorisation (E1) à partir de premiers énoncés textuels, d'un ensemble de premières séquences de concept susceptibles d'être corrigées;
- détermination et mémorisation (E1) à partir de deuxièmes énoncés textuels, d'un ensemble de deuxièmes séquences de concept dites valides;
- comparaison (E2) de l'ensemble de premières séquences de concept à l'ensemble de deuxièmes séquences de concept et sélection des premières séquences de concept différentes des deuxièmes séquences de concept;
- analyse (E32) des premières séquences de concept sélectionnées et estimation d'au moins une caractéristique pour chaque première séquence de concept analysée; et
- génération et mémorisation (E4) d'au moins une règle de correction de séquence de concept en fonction de ladite au moins une caractéristique estimée.

2. Procédé conforme à la revendication 1, comprenant une correction des séquences de concept d'un énoncé textuel initial en fonction des règles de correction de séquence de concept générées.

3. Procédé conforme à la revendication 1, comprenant une détermination des séquences de concept d'un énoncé initial, et une correction des séquences de concept de l'énoncé initial en fonction des règles de correction de séquence de concept générées.

4. Procédé conforme à l'une quelconque des revendications 1 à 3, **caractérisé en ce qu'**un deuxième énoncé correspond à une transcription d'un premier énoncé prédéterminé, et ladite comparaison (E2) est appliquée entre la première séquence de concept déterminée en fonction du premier énoncé prédéterminé et la deuxième séquence de concept déterminée en fonction du deuxième énoncé correspondant à la transcription.

5. Procédé conforme à l'une quelconque des revendications 1 à 4, comprenant une détermination (E31) d'un nombre de répétition de chaque première séquence de concept différente parmi l'ensemble des premières séquences de concept afin de ne générer (E4) une règle de correction pour la première séquence de concept différente que lorsque le nombre de répétition est supérieur à un seuil prédéterminé.

6. Procédé conforme à l'une quelconque des revendications 1 à 5, comprenant une adjonction d'une règle de correction de séquence de concept prédéterminée aux règles de correction de séquence de concept générées.

7. Dispositif de génération informatique de règles de correction de séquence de concept, une séquence de concept provenant d'un énoncé textuel, **caractérisé en ce qu'**il comprend :
- un moyen (MD, BDS) pour déterminer et mémoriser à partir de premiers énoncés textuels, un ensemble de premières séquences de concept susceptibles d'être corrigées;
- un moyen (MD, BDS) pour déterminer et mémoriser à partir de deuxièmes énoncés textuels, un ensemble de deuxièmes séquences de concept dites valides;
- un moyen (CP) pour comparer l'ensemble de premières séquences de concept à l'ensemble de deuxièmes séquences de concept afin de sélectionner des premières séquences de concept différentes des deuxièmes séquences de concept, et
- un moyen (GR) pour analyser les premières séquences de concept sélectionnées et pour estimer au moins une caractéristique pour chaque première séquence de concept analysée, et
- un moyen (GR, BDR) pour générer et mémoriser au moins une règle de correction de séquence de concept en fonction de ladite au moins une caractéristique estimée.

8. Dispositif conforme à la revendication 7, comprenant un moyen (CR) pour corriger des séquences de concept prédéterminées en fonction des règles de correction de séquence de concept générées.

9. Programme d'ordinateur sur un support d'informations, ledit programme comportant des instructions de programme adaptées à la mise en oeuvre d'un procédé de génération informatique de règles de correction de séquence de concept selon l'une quelconque des revendications 1 à 6, lorsque ledit programme est chargé et exécuté dans un système informatique.
